(19) **Europäisches Patentamt**
European Patent Office
Office européen des brevets

(11) **EP 1 912 812 B1**

(12) **EUROPÄISCHE PATENTSCHRIFT**

(45) Veröffentlichungstag und Bekanntmachung des Hinweises auf die Patenterteilung:
**16.09.2009   Patentblatt 2009/38**

(21) Anmeldenummer: **05768669.3**

(22) Anmeldetag: **14.07.2005**

(51) Int Cl.:
*B60J 3/02* (2006.01)     *E05F 5/00* (2006.01)
*B60J 1/20* (2006.01)

(86) Internationale Anmeldenummer:
**PCT/EP2005/007669**

(87) Internationale Veröffentlichungsnummer:
**WO 2007/006333 (18.01.2007 Gazette 2007/03)**

(54) **ROLLOSYSTEM MIT GEBREMSTEM GLEITER**

ROLLER BLIND SYSTEM COMPRISING A DECELERATED SLIDER

SYSTEME DE STORE DOTE D'UN ELEMENT COULISSANT FREINE

(84) Benannte Vertragsstaaten:
**DE**

(43) Veröffentlichungstag der Anmeldung:
**23.04.2008   Patentblatt 2008/17**

(73) Patentinhaber: **Webasto AG**
**82131 Stockdorf (DE)**

(72) Erfinder:
• **EISELT, Manuel**
  **45131 Uddevalla (SE)**
• **ELBS, Norbert**
  **80797 München (DE)**

(56) Entgegenhaltungen:
WO-A-94/13923         DE-A1- 4 320 393
DE-A1- 10 245 929     US-A1- 2002 050 327

## Beschreibung

Die vorliegende Erfindung betrifft ein Rollosystem mit gebremstem Gleiter gemäß dem Oberbegriff von Anspruch 1.

Bisherige manuelle Rollos mit den Stellungen vollständig geöffnet und vollständig geschlossen, wie beispielsweise Kofferraumabdeckungen bei Kombifahrzeugen, beinhalten häufig eine vorgespannte Wickelwelle, welche auf das ausgezogenen Rollo eine Rückstellkraft wirken lässt. Damit wird erreicht, dass beim Freigeben des aufgespannten Rollos in der Schließstellung das anschließende Aufwickeln des Rollos durch die vorgespannte Wickelwelle automatisch ausgeführt wird. Wenn solch ein vorgespanntes Rollo jedoch keine Bremseinrichtung aufweist, kann das Rollo nach dem Lösen aus der Schließstellung zurückschnalzen und dabei Anbauteile beschädigen oder selbst Schaden nehmen, sofern nicht besondere Sicherheitsmaßnahmen (die wiederum zusätzliche Kosten, Bauraum und Gewicht bedeuten) berücksichtigt werden. Externe Bremsen, wie beispielsweise Silikonbremsen sind zwar denkbar, wirken aber in beide Richtungen, wodurch sich auch die Kraft erhöht, die zum Ausziehen des Rollos eingesetzt werden muss. Andere Systeme zum Bremsen eines vorgespannten Rollos können dazu ausgelegt sein, das Rollo in der Position zu fixieren, in der ein Bediener einen entsprechenden Griff am Rollo loslässt.

Die nicht vorveröffentlichte PCTIEP2005/005061 offenbart ein Fahrzeug-Rollosystem mit einem gegen eine Rückstellkraft einer Wickelrolle aufgespannten Rollo und mindestens einem Zugspriegel, wobei der Zugspriegel einen Griff zur Betätigung des Rollos und seitlich mindestens je einen Gleiter beinhaltet, der in einer parallel zur Schließrichtung des Rollos verlaufenden Führungsschiene verschiebbar gelagert ist und dem mindestens eine Bremsfläche zugeordnet ist, wobei der Gleiter so gestaltet ist, dass beim Loslassen des Griffs durch die Rückstellkraft der Wickelrolle die Bremsfläche zur Führungsschiene hin verlagert wird, wodurch sie mit mindestens einer Gegenfläche der Führungsschiene in Bremswirkung tritt. Hierzu ist der Gleiter insbesondere als Wippe oder sägezahnförmig ausgestaltet

Die gattungsgemäße DE 102 45 929 A1 beschreibt eine Baugruppe bestehend aus mindestens einer Führungsschiene und einem Schlitten, die vorzugsweise bei einem Sonnenschutzrollo in einem Kraftfahrzeug eingesetzt werden kann. Die Baugruppe beinhaltet dabei einen Schritten, welcher ein Bremselement aufweist, das mit der Bremsfläche der Führungsschiene zusammenwirken kann, wobei der Schlitten mindestens eine Feder aufweist, die den Schlitten so beaufschlagt, dass das Bremselement gegen die Bremsfläche gedrückt wird. Somit ist gewährleistet, dass der Schlitten in der Führungsschiene in der jeweiligen Position verbleibt. Der Schlitten weist ferner eine Kippkante auf, und beispielsweise durch Ziehen an einem Griff des Rollos wird der Schlitten entgegen der Wirkung der Feder um die Kippkante geschwenkt, wodurch das Bremselement sich von der Bremsfläche löst und der Schlitten somit innerhalb der Führungsschiene verschoben werden kann. Sobald der Bediener den Schlitten nicht mehr weiter in der Führungsschiene verschiebt, wird er von der Feder wieder in seine Ausgangsstellung zurückgedrückt und arretiert.

Die DE 102 48 958 A1 offenbart ebenfalls eine Baugruppe, welche mindestens eine Führungsschiene und einen Schlitten insbesondere für ein Sonnenschutzrollo in einem Kraftfahrzeug beinhaltet. Auch in diesem Fall weist der Schlitten wiederum mindestens ein Bremselement auf, welches in eine Bremsnut der Führungsschiene eingreifen kann, um den Schlitten in der Führungsschiene zu arretieren, wenn der Bediener das Rollo loslässt. Dabei weist der Schlitten eine Drehachse und ein von der Drehachse beabstandetes Abstützelement auf, welches aufgrund seiner Federwirkung das Bremselement in die Bremsnut drückt. Wie bei der DE 102 45 929 A1 ergibt sich auch hier somit ein Rollo, bei welchem durch Betätigen eines Griffes von einem Bediener und dem dadurch bewirkten Lösen des Bremselements von der Führungsschiene ein Verschieben des Rollos ermöglicht wird und andererseits beim Loslassen des Griffs das Rollo in der jeweiligen Position sofort fixiert wird.

Es ist Aufgabe der vorliegenden Erfindung, ein Rollosystem der eingangs genannten Art zu schaffen, bei welchem beim Lösen eines vorgespannten, abgewickkelten Rollos in der Verschlussposition ein Zurückschnalzen des Rollos in die geöffnete Position verhindert wird. Es ist ferner Aufgabe der vorliegenden Erfindung eine entsprechende Lösung anzubieten, die kostengünstig hergestellt werden kann und dem Kunden einen hohen Bedienungskomfort bietet.

Diese Aufgabe wird erfindungsgemäß dadurch gelöst, dass der Gleiter einen ersten Hebelarm und einen mit diesem gemeinsam um eine Achse verschwenkbaren zweiten Hebelarm aufweist, der ein Bremselement dergestalt aufweist, dass beim Loslassen des Griffs durch die Rückstellkraft der Wickelrolle die Bremsfläche zur Führungsschiene hin verlagert wird, wodurch sie mit mindestens einer Gegenfläche der Führungsschiene in Bremswirkung tritt.

Da bei dieser erfindungsgemäßen Lösung die Rückstellkraft des Rollos selbst, d.h. der Wickelrolle, die Bremsfläche verlagert, entfällt beispielsweise der Einsatz von zusätzlichen Federelementen. Ein Bediener des Rollos kann somit durch Ziehen an dem Griff das Rollo abwickeln und sobald das Rollo komplett abgewickelt ist, dieses in geeigneter Weise fixieren. Zum Aufwickeln des Rollos wird das Rollo gelöst und anschließend kann der Bediener den Griff einfach freigeben. Durch die Bremswirkung des Gleiters mit der Führungsschiene wird das Rollo dann gebremst aufgewickelt, wodurch ein Zurückschnalzen des vorgespannten Rollos und die daraus resultierenden, oben beschriebenen Probleme verhindert werden.

Weitere bevorzugte Ausgestaltungen der Erfindung ergeben sich aus den Unteransprüchen.

In einer bevorzugten Ausführungsform der Erfindung weist der Gleiter eine Drehachse senkrecht zur Schließrichtung des Rollos auf, um die der Gleiter durch die Rücksteilkraft des Rollos verkippt wird, wodurch, wenn das Rollo zum Aufwickeln freigegeben ist, die Bremsfläche des Gleiters gegen die Gegenfläche der Führungsschiene gedrückt wird, um mit ihr in Bremswirkung zu treten. Durch entsprechende Gestaltung der einzelnen Komponenten des Rollosystems lässt sich hierbei die durch die Bremsfläche erzeugte Bremskraft einstellen. Insbesondere kann bei dieser Ausführungsform die Bremskraft durch Wahl des Reibkoeffizienten der Bremsfläche sowie des Hebelverhältnisses am Gleiter eingestellt werden.

In einer besonders bevorzugten Ausführungsform dieser Erfindung ist dabei die Drehachse des Gleiters parallel zu der Wickelrolle, auf die das Rollo aufgewickelt ist. Weiterhin kann der Gleiter mindestens zwei Bremsflächen aufweisen, die diametral zur Drehachse des Gleiters angeordnet sind und bei einer Verkippung des Gleiters jeweils mit zwei gegenüberüegenden Flächen der Führungsschiene in Bremswirkung treten.

Während das Rollosystem so gestaltet sein kann, dass die Bremsfläche mindestens zum Teil von der in der Führungsschiene geführten Gleitfläche des Gleiters gebildet wird, kann in alternativen Ausführungsformen die Führungsschiene eine Führungsbahn aufweisen, in welcher der Gleiter verschiebbar gelagert ist, wobei die Gegenfläche der Führungsschiene, mit der die Bremsfläche in Bremswirkung tritt, außerhalb der Führungsbahn angeordnet ist. Da im letzteren Fall die dem Gleiter zugeordnete Bremsfläche und die Gleitfläche des Gleiters in unterschiedlichen Bahnen der Führungsschiene laufen, können im Gleitkanal die Reibung herabsetzende Mittel, wie z.B. Gleitfett, eingesetzt werden, ohne dass hierdurch die Bremswirkung der Bremsfläche beeinträchtigt wird.

Die Bremsflächen des Gleiters können in die Gleiter integriert sein oder als separat angebrachte Elemente mit hoher Reibungszahl ausgebildet sein.

Der Gleiter kann generell mehrere Gleitflächen aufweisen, die mit mindestens zwei Gegenflächen der Führungsschiene in Bremswirkung treten, welche sich auf entgegengesetzten Seiten des Gleiters befinden. Bei einer u-förmigen Führungsschiene kann somit der Gleiter innerhalb der beiden Schenkel liegen und mit beiden in Bremswirkung treten.

Vorzugsweise ist die Rückstellkraft des Rollos immer größer als die Bremswirkung der Gleiter insgesamt. Damit wird das Rollo beim Aufwickeln zwar gebremst, jedoch nicht blockiert. Umgekehrt aber kann auch ein Blockieren realisiert werden, indem die Bremswirkung erhöht wird. Letzteres kann bei Rollos zum Sonnenschutz bevorzugt sein, wenn das Rollo auch in Zwischenpositionen fixierbar sein soll.

Das Rollosystem ist bei bevorzugten Ausführungsformen so ausgelegt, dass durch Ziehen am Griff in Schließrichtung diese Zugkraft der Rückstellkraft des Rollos entgegenwirkt und so die mindestens eine Bremsfläche von der Führungsschiene weg verlagert, wodurch die Bremswirkung reduziert wird. Damit wird der Kraftaufwand zum Abrollen des Rollos reduziert.

Der Griff kann, wenn der Gleiter verkippt wird, beim Ziehen durch einen Bediener ein Drehmoment auf den Gleiter bewirken, welches dem Drehmoment durch die Rückstellkraft des Rollos entgegengesetzt ist.

Bevorzugte Ausführungsbeispiele der vorliegenden Erfindung werden nachstehend unter Bezugnahme auf die Zeichnungen näher erläutert. Hierbei zeigen:

Fig. 1    eine perspektivische Detailansicht auf ein erfindungsgemäßes Rollosystem für ein Fahrzeug;

Fig. 2    eine schematische, teilweise detaillierte Seitenansicht eines erfindungsgemäßen Rollosystems; und

Fig. 3    eine Querschnittsansicht eines Teils des erfindungsgemäßen Rollosystems.

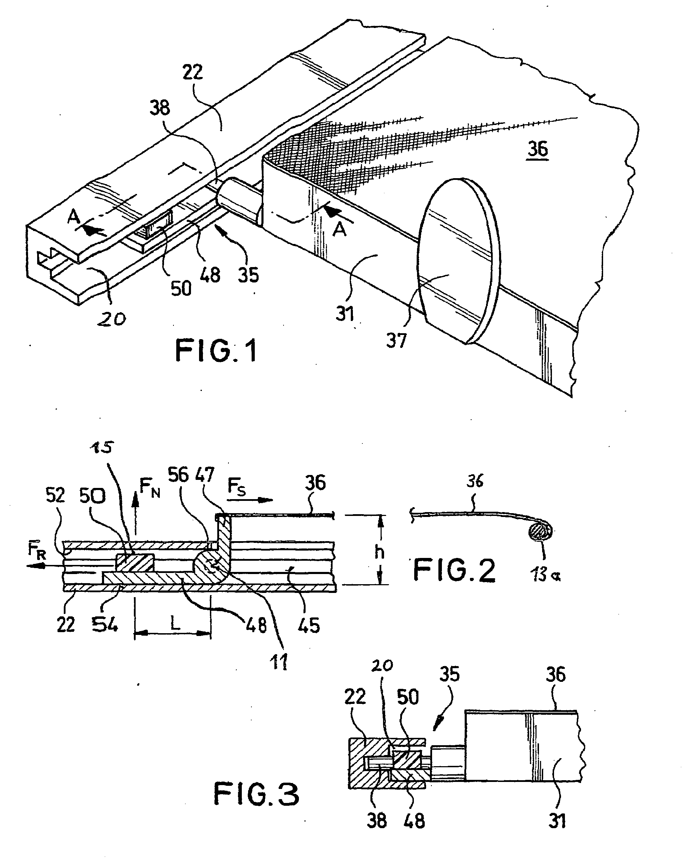

Fig. 1 zeigt einen erfindungsgemäßen Gleiter 35, der mittels einer Führungsschiene 22 geführt wird, welche eine Führungsnut 20 aufweist, die den Gleiter 35 quer zur Verschieberichtung eines Rollos 36 fixiert. Gleiter 35 und Rollo 36 sind mittels eines Zugspriegels 31 in Verbindung und das Rollo 36 wird von einer vorgespannten Wickelwelle 13a (Fig. 2) auf- oder abgewickelt. Der Gleiter 35 weist eine Bremsfläche 15 auf, mit der er mit der Führungsschiene 22 in Bremswirkung steht. Diese Bremsfläche kann integral an dem Gleiter 35 ausgebildet sein oder separate Bremselemente 50 ausgebildet sein, welche durch eine hohe Reibungszahl die Bremswirkung noch verstärken. Der Gleiter 35 selbst kann beispielsweise ein Kunststoffteil sein, welches mittels eines Spritzgussverfahrens hergestellt ist, und die Bremselemente 50 können z.B. an den Gleiter angespritzt sein. Die Bremswirkung wird erzielt, indem durch eine Rückstellkraft $F_S$ des Rollos 36 nach rechts über einen Hebelarm (näher in Fig. 2 beschrieben) ein Drehmoment um eine Drehachse 11 auf den Gleiter 35 wirkt. Da in Fig. 1 nur das Drehmoment des Rollos 36 wirkt und nicht etwa ein zusätzliches Drehmoment oder eine zusätzliche Kraft durch einen Bediener, wird der Gleiter 35 somit in der Bildebene im Uhrzeigersinn verkippt und die Bremselemente 50 bzw. die Bremsflächen 15 werden gegen die Gegenflächen 52 der Führungsschiene 22 gepresst. Der Gleiter 35 ist hierbei so geformt, dass durch diese Verkippung ein Pressen des Gleiters 35 auf der Führungsschiene 22 resultiert. Somit entstehen Bremskräfte, die der Rückstellkraft $F_S$ des Rollos 36 entgegenwirken und damit entgegengesetzt zur Aufwickelrichtung des Rollos 36 sind. Die Bremskraft des Gleiters 35 kann dabei beispielsweise über die Länge des Hebelarms des Rollos 36, die Rückstellkraft $F_S$ des Rollos 36 oder die Reibungszahl der Bremsflächen 15 so eingestellt werden, dass beim Loslassen des Rollos 36 dieser in einer gedämpften, kontrollierten Bewegung aufgewickelt wird. Alternativ kann die Bremswirkung auch höher sein als die Rückstellkraft $F_S$, wodurch das Rollo 36 beim Loslassen in der Führungsschiene 22 blockiert wird.

Fig. 2 zeigt einen Längsschnitt durch die in Fig. 1 angedeutete Linie A-A. Wie insbesondere aus den Schnitten zu ersehen ist, ist in der Führungsschiene 22 eine Führungsbahn 45 vorgesehen, in der sich ein Gleitstift 38 des Gleiters 35 abstützt. Der Gleiter 35 bildet gemeinsam mit dem über die Führungsschiene 22 nach oben hinaus verlängerten Führungsspiegel 31 ein Hebelelement mit einem in Auszugrichtung des Rollos 36 nach vorne weisenden ersten Hebelarm 48 und einem zweiten nach oben weisenden Hebelarm 47, an dessen oberen Ende die Rollobahn 36 befestigt ist. Die beiden Hebelarme 47,48 sind dabei gemeinsam um eine Achse 11 schwenkbar gelagert.

Der vordere Hebelarm 48 des Gleiters 35 trägt, wie zuvor ausgeführt, das Bremselement 50, welches beim Verkippen des Zugspriegels 31 mit einer Gegenfläche 52 der Führungsschiene 22 in Eingriff tritt. Fig. 2 zeigt hierbei den Zustand des Rollosystems, wenn ein Bediener das Rollo durch Betätigung eines an dem Zugspriegel 31 vorgesehenen Griffs 37 (Fig.1) nach vorne zieht, um die Rollobahn 36 abzuwickeln, wobei hierbei der Zugspriegel und damit der Gleiter 35 gegen die Rückstellkraft $F_S$ der Wickelrolle 13a nach vorne verkippt wird (in Fig. 2 gegen den Uhrzeigersinn). Wird der Griff 37 losgelassen, so wird der Gleiter 35 durch die Rückstellkraft $F_S$ nach hinten verkippt, so dass sich das Bremselement 50 gegen die Führungsschiene 22 anlegt. Die von der Bremsfläche erzeugte Brems- oder Reibungskraft $F_R$ errechnet sich hierbei aus der stoffabhängigen Reibungszahl $\mu$ und der senkrecht auf die Gegenfläche 52 wirkenden Normalkraft $F_N$:

$$F_R = \mu \cdot F_N.$$

Hierbei lässt sich die Normalkraft $F_N$ wiederum ausgehend vom Hebelgesetz aus der Rückstellkraft des Rollos $F_S$ berechnen. Hierbei gilt für einen Gleiter mit einem in Auszugrichtung des Rollos nach vorne weisenden Hebelarm 48 der Länge L und einem nach oben weisenden Hebelarm 47 der Höhe h:

$$F_N \cdot L = F_S \cdot h$$

bzw.

$$F_N = \frac{h}{L} \cdot F_S$$

Für die durch die Bremsfläche erzeugte Reibungskraft gilt somit:

$$F_R = \mu \cdot \frac{h}{L} \cdot F_S$$

Durch geeignete geometrische Gestaltung des Gleiters und des Zugspriegels lässt sich somit unter Berücksichtigung des Reibungskoeffizienten der Bremsfläche mit Bezug auf das Material der Gegenfläche der Führungsschiene in einfacher Weise eine gewünschte Bremskraft einstellen. Insbesondere kann die Anordnung hierbei so getroffen sein, dass entweder für ein sanftes Zurückgleiten des Zugspriegels gesorgt ist, sobald das Rollo aus seiner vollständig die Dachöffnung verschließenden Stellung gelöst wird, oder aber das Rollo in beliebige Zwischenstellungen zwischen der vollständig geöffneten und der vollständig geschlossenen Stellung verfahren werden kann.

Bei Ausführungsformen, bei welchen mittels der Bremsfläche für ein sanftes Zurückgleiten des Rollos in seine vollständig aufgewickelte Stellung gesorgt werden soll, kann hierbei durch Wahl des Hebelverhältnisses unter Berücksichtigung des Reibungskoeffizienten die Öffnungs- oder Aufwickelgeschwindigkeit des Rollos festgelegt werden. Soll hingegen das Rollo in beliebigen Zwischenstellungen zwischen der vollständig geöffneten und der vollständig geschlossenen Stellung angeordnet werden können, so kann durch entsprechende Gestaltung dafür gesorgt werden, dass die Reibungskraft $F_R$ größer als die Rückstellkraft $F_S$ der Wickelrolle ist, so dass das Rollo in beliebigen Stellungen aufgrund der Rückstellkraft der Wickelrolle stehen bleibt. Soll das Rollo geöffnet werden, d.h. auf die Wickelrolle aufgewickelt werden, so wird der Zugspriegel nach vorne verkippt und das Rollo von Hand nach hinten geschoben.

Bei der in den Fig. 2 und 3 gezeigten Gestaltung des Gleiters 35, bei welcher der Gleiter über den Gleitstift 38 in der Führungsbahn 45 der Führungsschiene 22 abgestützt ist, laufen die Gleitfläche des Gleiters und die Bremsfläche des Gleiters in unterschiedlichen Führungsbahnen der Führungsschiene 22. Im Bereich des Gleitstifts 38 eingesetzte Gleitwickel beeinträchtigen somit nicht die Bremswirkung der Gleitfläche. Es versteht sich, dass die Gleitflächen und Bremsflächen auch völlig getrennt voneinander angeordnet werden könnten, beispielsweise indem der Gleiter 35 so gestaltet wird, dass das Bremselement 50 von außen gegen die Führungsschiene 22 angreift. Insbesondere, wenn kein Halten des Rollos in Zwischenstellungen bewirkt werden soll und die Bremsflächen dem sanften Zurückgleiten des Rollos dienen sollen, kann jedoch auch auf den separaten Führungskanal 45 und den Gleitstift 38 verzichtet werden, wobei der Gleiter 35 dann so gestaltet werden könnte, dass dieser mit seiner Unterseite 54 des Hebelarms 48 sowie mit der Oberseite 56 seines zentralen an den Führungsspiegel 31 angreifenden Bereichs innerhalb der Führungsschiene 22 geführt ist.

**Bezugszeichenliste**

| 11 | Drehachse |
|---|---|
| 13a | Wickelwelle |
| 15 | Bremsfläche |
| 20 | Führungsnut |
| 22 | Führungsschiene |
| 31 | Zugspriegel |
| 32 | Querkräfte |
| 35 | Gleiter |
| 36 | Rollobahn |
| 37 | Griff |
| 38 | Gleitstift |
| 40 | Gleitkörper |
| 41 | Einschnitt |
| 42 | Bremskörper |
| 43 | Fortsatz |
| 44 | Mitnehmer |
| 46 | Anschlag |
| 47, 48 | Hebelarm |
| 50 | Bremselement |
| 52 | Gegenfläche an 22 |

**Patentansprüche**

1. Fahrzeug-Rollosystem mit einem gegen eine Rückstellkraft ($F_s$) einer Wickelrolle (13a) aufgespannten Rollo (36) und mindestens einem Zugspriegel (31), wobei der Zugspriegel einen Griff (37) zur Betätigung des Rollos (36) und seitlich mindestens je einen Gleiter (35) beinhaltet, der in einer parallel zur Schließrichtung des Rollos (36) verlaufenden Führungsschiene (22) verschiebbar gelagert ist und dem mindestens eine Bremsfläche (15) zugeordnet ist, **dadurch gekennzeichnet, dass** der Gleiter (35) einen ersten Hebelarm (47) und einen mit diesem gemeinsam um eine Achse (11) verschwenkbaren zweiten Hebelarm (48) aufweist, der ein Bremselement (50) dergestalt aufweist, dass beim Loslassen des Griffs (37) durch die Rückstellkraft der Wickelrolle (13a) die Bremsfläche (15) zur Führungsschiene (22) hin verlagert wird, wodurch sie mit mindestens einer Gegenfläche (52) der Führungsschiene (22) in Bremswirkung tritt.

2. Rollosystem gemäß Anspruch 1, **dadurch gekennzeichnet, dass** die mindestens eine Bremsfläche (15) des Gleiters (35) ein separat angebrachtes Element (50) mit hoher Reibungszahl ist.

3. Rollosystem gemäß einem der vorhergehenden Ansprüche, **dadurch gekennzeichnet, dass** der Gleiter (35) mehrere Bremsflächen (15) aufweist, die mit mindestens zwei Gegenflächen der Führungsschiene (22) in Bremswirkung treten, welche sich auf entgegengesetzten Seiten des Gleiters befinden.

4. Rollosystem gemäß einem der vorhergehenden Ansprüche, **dadurch gekennzeichnet, dass** die Rückstellkraft ($F_S$) des Rollos (36) größer ist als die Bremswirkung des mindestens eines Gleiters (35).

5. Rollosystem gemäß einem der vorhergehenden Ansprüche, **dadurch gekennzeichnet, dass** das Rollosystem so ausgelegt ist, dass durch Ziehen am Griff (37) in Schließrichtung (12), wobei die dabei aufgebrachte Zugkraft der Rückstellkraft des Rollos (36) entgegenwirkt, die mindestens eine Bremsfläche (15) von der Führungsschiene (22) weg verlagert wird, wodurch die Bremswirkung reduziert wird.

6. Rollosystem gemäß einem der vorhergehenden Ansprüche, **dadurch gekennzeichnet, dass** der Gleiter (35) eine Drehachse (11) senkrecht zur Schließrichtung des Rollos (36) aufweist, um welche durch die Rückstellkraft des Rollos (36) ein Drehmoment, wodurch, wenn das Rollo (36) zum Aufwickeln freigegeben wird, die wenigstens eine Bremsfläche (15) gegen die Gegenfläche (52) der Führungsschiene (22) gedrückt wird und mit ihr in Bremswirkung tritt.

7. Rollosystem gemäß Anspruch 6, **dadurch gekennzeichnet, dass** die Drehachse (11) des Gleiters (35) parallel zur Wickelrolle (13a) ist, auf die das Rollo (36) aufgewickelt werden kann.

8. Rollosystem gemäß Anspruch 6 oder 7, **dadurch gekennzeichnet, dass** der Gleiter (35) mindestens zwei Bremsflächen (15) aufweist, welche diametral zur Drehachse (11) angeordnet sind.

9. Rollosystem gemäß den Ansprüchen 6 bis 8, **dadurch gekennzeichnet, dass** das Rollosystem so ausgelegt ist, dass durch das Ziehen am Griff (37) in Schließrichtung ein Drehmoment auf den Gleiter (35) wirkt, welches dem Drehmoment durch die Rückstellkraft des Rollos (36) entgegenwirkt.

10. Rollosystem gemäß einem der vorhergehenden Ansprüche, **dadurch gekennzeichnet, dass** die Bremsfläche (15) mindestens zum Teil von der in der Führungsschiene (22) geführten Gleitfläche des Gleiters (35) gebildet wird.

11. Rollosystem gemäß einem der Ansprüchen 1 bis 9,

dadurch gekennzeichnet, dass die Führungsschiene (22) eine Führungsbahn aufweist, in welcher der Gleiter (35) verschiebbar gelagert ist, und die Gegenfläche (52) der Führungsschiene (22), mit der die Bremsfläche (15) in Bremswirkung tritt, innerhalb der Führungsbahn angeordnet ist.

**Claims**

1. Vehicle roller blind system, comprising a roller blind (36) which is stretched open counter to a restoring force ($F_S$) of a winding roller (13a), and at least one tension bow (31), wherein the tension bow contains a handle (37) for actuating the roller blind (36) and at least one slider (35) on each side, which slider is mounted displaceably in a guide rail (22) running parallel to the closing direction of the roller blind (36) and is assigned at least one braking surface (15), **characterized in that** the slider (35) has a first lever arm (47) and a second lever arm (48) which can be pivoted together with the first lever arm about an axis (11) and has a braking element (50) such that, when the handle (37) is released, the restoring force of the winding roller (13a) causes the braking surface (15) to be displaced towards the guide rail (22), as a result of which said braking surface enters into a braking action with at least one opposite surface (52) of the guide rail (22).

2. Roller blind system according to Claim 1, **characterized in that** the at least one braking surface (15) of the slider (35) has a separately attached element (50) with a high coefficient of friction.

3. Roller blind system according to one of the preceding claims, **characterized in that** the slider (35) has a plurality of braking surfaces (15) which enter into a braking action with at least two opposite surfaces of the guide rail (22), which surfaces are located on opposite sides of the slider.

4. Roller blind system according to one of the preceding claims, **characterized in that** the restoring force ($F_S$) of the roller blind (36) is greater than the braking action of the at least one slider (35).

5. Roller blind system according to one of the preceding claims, **characterized in that** the roller blind system is designed in such a manner that, by pulling on the handle (37) in the closing direction (12), the pulling force applied in the process counteracting the restoring force of the roller blind (36), the at least one braking surface (15) is displaced away from the guide rail (22), as a result of which the braking action is reduced.

6. Roller blind system according to one of the preceding claims, **characterized in that** the slider (35) has an axis of rotation (11) perpendicular to the closing direction of the roller blind (36), about which axis of rotation a torque acts because of the restoring force of the roller blind (36), as a result of which, when the roller blind (36) is released in order to be wound up, the at least one braking surface (15) is pressed against the opposite surface (52) of the guide rail (22) and enters into a braking action therewith.

7. Roller blind system according to Claim 6, **characterized in that** the axis of rotation (11) of the slider (35) is parallel to the winding roller (13a) onto which the roller blind (36) can be wound up.

8. Roller blind system according to Claim 6 or 7, **characterized in that** the slider (35) has at least two braking surfaces (15) which are arranged diametrically with respect to the axis of rotation (11).

9. Roller blind system according to Claims 6 to 8, **characterized in that** the roller blind system is designed in such a manner that pulling on the handle (37) in the closing direction causes a torque to act on the slider (35), said torque counteracting the torque produced by the restoring force of the roller blind (36).

10. Roller blind system according to one of the preceding claims, **characterized in that** at least part of the braking surface (15) is formed by the sliding surface of the slider (35), which sliding surface is guided in the guide rail (22).

11. Roller blind system according to one of Claims 1 to 9, **characterized in that** the guide rail (22) has a guide track in which the slider (35) is displaceably mounted, and the opposite surface (52) of the guide rail (22), with which the braking surface (15) enters into a braking action, is arranged within the guide track.

**Revendications**

1. Système de store de véhicule comprenant un store (36) tendu à l'encontre d'une force de rappel ($F_S$) d'une bobine (13a) et au moins un arceau de traction (31), l'arceau de traction comprenant une poignée (37) pour l'actionnement du store (36) et comprenant, latéralement, au moins un élément coulissant (35) qui est monté de manière déplaçable dans un rail de guidage (22) s'étendant parallèlement à la direction de fermeture du store (36), et qui est associé à au moins une surface de freinage (15), **caractérisé en ce que** l'élément coulissant (35) présente un premier bras de levier (47) et un deuxième bras de levier (48) pouvant pivoter conjointement avec celui-ci autour d'un axe (11), qui présente un élément de freinage (50) de telle sorte que lors du relâchement de la poignée (37) la surface de freinage (15) soit déplacée vers le rail de guidage (22) par la force de rappel de la bobine (13a), de sorte qu'elle entre en interaction de freinage avec au moins une surface conjuguée (52) du rail de guidage (22).

2. Système de store selon la revendication 1, **caractérisé en ce que** l'au moins une surface de freinage (15) de l'élément coulissant (35) est un élément (50) monté séparément, de haut coefficient de frottement.

3. Système de store selon l'une quelconque des revendications précédentes, **caractérisé en ce que** l'élément coulissant (35) présente plusieurs surfaces de freinage (15), qui entrent en interaction de freinage avec au moins deux surfaces conjuguées du rail de guidage (22), qui se trouvent sur des côtés opposés de l'élément coulissant.

4. Système de store selon l'une quelconque des revendications précédentes, **caractérisé en ce que** la force de rappel ($F_S$) du store (36) est supérieure à l'effet de freinage de l'au moins un élément coulissant (35).

5. Système de store selon l'une quelconque des revendications précédentes, **caractérisé en ce que** le système de store est conçu de telle sorte qu'en tirant sur la poignée (37) dans la direction de fermeture (12), la force de traction appliquée s'opposant en l'occurrence à la force de rappel du store (36), l'au moins une surface de freinage (15) soit déplacée à l'écart du rail de guidage (22), de sorte que l'effet de freinage soit réduit.

6. Système de store selon l'une quelconque des revendications précédentes, **caractérisé en ce que** l'élément coulissant (35) présente un axe de rotation (11) perpendiculairement à la direction de fermeture du store (36), autour duquel s'exerce un couple par la force de rappel du store (36), de telle sorte que lorsque le store (36) est libéré pour son enroulement, l'au moins une surface de freinage (15) soit pressée contre la surface conjuguée (52) du rail de guidage (22) et entre en interaction de freinage avec lui.

7. Système de store selon la revendication 6, **caractérisé en ce que** l'axe de rotation (11) de l'élément coulissant (35) est parallèle à la bobine (13a) sur laquelle peut être enroulé le store (36).

8. Système de store selon la revendication 6 ou 7, **caractérisé en ce que** l'élément coulissant (35) présente au moins deux surfaces de freinage (15) qui sont disposées diamétralement par rapport à l'axe de rotation (11).

9. Système de store selon l'une quelconque des revendications 6 à 8, **caractérisé en ce que** le système de store est conçu de telle sorte que par traction sur la poignée (37) dans la direction de fermeture, un couple agisse sur l'élément coulissant (35), et s'oppose au couple par la force de rappel du store (36).

10. Système de store selon l'une quelconque des revendications précédentes, **caractérisé en ce que** la surface de freinage (15) est formée au moins en partie par la surface de glissement de l'élément coulissant (35) guidée dans le rail de guidage (22).

11. Système de store selon l'une quelconque des revendications 1 à 9, **caractérisé en ce que** le rail de guidage (22) présente une piste de guidage dans laquelle l'élément coulissant (35) est monté de manière déplaçable, et la surface conjuguée (52) du rail de guidage (22), avec laquelle la surface de freinage (15) entre en interaction de freinage, est disposée à l'intérieur de la piste de freinage.

FIG.1

FIG.2

FIG.3

## IN DER BESCHREIBUNG AUFGEFÜHRTE DOKUMENTE

**In der Beschreibung aufgeführte Patentdokumente**

- DE 10245929 A1
- DE 10248958 A1